# EUROPEAN PATENT SPECIFICATION

(11) **EP 0 296 577 B1**
(45) Date of publication and mention of the grant of the patent: **13.07.1994**
(21) Application number: 88109986.5
(22) Date of filing: 23.06.1988
(51) Int. Cl.: C09J 133/04, C09J 109/00, C08F 220/12

(54) **Acrylate-based pressure sensitive adhesive composition**
Druckempfindliche Klebstoffzusammensetzung auf Acrylatbasis
Composition auto-adhésive à base d'acrylates

(30) Priority: 26.06.1987 DE 3721097
(43) Date of publication of application: 28.12.1988
(73) Proprietor: THE DOW CHEMICAL COMPANY, Midland Michigan 48640-1967 (US)
(72) Inventor: Rance, Robert W., Bühl (DE); Lazarus, Etienne R.D.A., FR-67500 Haguenau (FR)
(74) Representative: Sternagel, Hans-Günther, Dr.

(56) References cited:
- FR-A- 1 521 776
- JP-A-59 126 000
- JP-A-61 162 571
- JP-A-61 266 695
- US-A- 4 419 481
- PATENT ABSTRACTS OF JAPAN, vol. 10, no. 269 (C-372)[2325], 12th September 1986;& JP-A-61 091 277 (MITSUI TOATSU CHEM. INC.) 09-05-1986

## Description

The present invention relates to improved (meth)acrylate-containing pressure sensitive adhesive polymer compositions. By the use of a combination of a hydroxyalkyl (meth)acrylate and itaconic acid in polymers containing (meth)acrylate-type monomers, surprising combinations of adhesion and shear strength are obtained.

As used in the art, the term "pressure sensitive adhesives" designates a polymeric material which, when dried, is aggressively and permanently tacky at room temperature. A typical pressure sensitive adhesive will firmly adhere to a variety of dissimilar surfaces upon mere contact without the need of more than finger- or hand-applied pressure. The most important properties recognized by the pressure sensitive adhesive industry are the adhesion ("tack") and resistance to shear of these polymer compositions. Attempts to improve the tack properties of a pressure sensitive adhesive, such as by the addition of a tackifier, unfortunately tend to reduce the resistance to shear and promote shear failure.

Recent efforts to optimize pressure sensitive adhesive properties have focused on the use of acrylate-type latex polymers and the use of minor amounts of hydrophylic monomers therein. In EP 48950 latex polymers based on acrylate and diene monomers are modified with minor amounts of an unsaturated acid to improve their pressure sensitive adhesive properties. In JP-B-59-47,212 similar acrylate-diene polymers are taught which attempt to replace the major part of the acid with a hydroxyalkyl acrylate monomer. JP-A-61-141,775 (1986) discloses the use of specific oligomeric emulsifier compounds with pressure sensitive adhesive latex polymers based on styrene and butadiene and further containing optionally methyl methacrylate, itaconic acid and hydroxyethyl acrylate.

US-A-4,415,481 refers to an adhesive based on styrene butadiene and itaconic acid blended with a tackifying resin. The reference doesn't disclose the use of the hydroxyalkylate nor it discloses the selection of itaconic acid over carboxylic acids, and in fact the reference discloses at column 3, lines 50-52, that acrylic acid, methacrylic acid, itaconic acid, fumaric acid and maleic acid are equivalent.

JP-A-59-126000 discloses an acrylate useful as a binder in sheet making. The reference does not disclose how to prepare a pressure sensitive adhesive material. The disclosed composition comprises 0 to 15 % methyl methacrylate or styrene, 1 to 15 % of a hydroxyalkyl acrylate or hydroxyethyl methacrylate, 0.5 to 5 percent of an ethylenically unsaturated dicarboxylic acid, 10 to 45 weight percent of acrylonitrile or methacrylonitrile and 15 to 70 weight percent of butadiene. The reference discloses that acrylonitrile is necessary for the desired use as a binder in sheet manufacturing.

FR-A-1521776 discloses an adhesive layer for binding a photographic film layer to a polyester base. The sublayer is a tricomponent copolymer of an alkyl acrylate or methacrylate, an aliphatic difunctional monomeric compound with at least two unsaturated groups and itaconic, fumaric, acrylic or methacrylic acid. Example 17 of this reference discloses such an adhesive layer comprising methacrylate, hydroxyethyl methacrylate and itaconic acid. Example 18 shows a polymer of methacrylate, hydroxypropyl methacrylate and itaconic acid.

JP-A-61-91277 refers to a releasable self-adhesive comprising 100 weight parts of a vinyl polymer emulsion consisting of 05. to 10 weight % units of an unsaturated acid monomer (e.g. acrylic or itaconic acid), 0.5 to 10 weight % units of an unsaturated monomer containing hydroxyl groups (e.g. 2-hydroxyethyl acrylate) and the remaining part of units of an unsaturated copolymerizable monomer (e.g. butylacrylate, acrylonitrile or vinylacetate) and 0.2-5 parts by weight alkali metal compound and optionally additives like filler, plasticizer, tackifier etc.

However, there is still a need for pressure sensitive adhesive polymer compositions with better combinations of tack and shear strength.

According to the present invention there is provided an improved pressure sensitive adhesive composition comprising
(I) a polymer consisting of
   (A) at least one (meth)acrylate monomer represented by the formula CH₂=C(R¹)C(O)-OR² wherein R¹ is -H or a methyl radical and R² is a straight or branched chain alkyl radical having from 1-20 carbon atoms;
   (B) a hydroxyalkyl (meth)acrylate monomer represented by the formula CH₂=C(R⁸)-C(O)-O-R⁹-OH wherein R⁸ is -H or a methyl radical and R⁹ is a straight or branched chain hydrocarbon radical having 1-10 carbon atoms;
   (C) from 1-5 percent by weight of itaconic acid monomer and
(II) a tackifier characterized in that the polymer (I) contains from 1.5 to 17 percent by weight of component (B); and
   (D) optionally from 1-80 percent by weight of a conjugated diene monomer represented by the formula CH₂=C(R³)C(R⁴)=C(R⁵)-R⁶ wherein R³, R⁴, R⁵ and
      R⁶ are indepentently -H, halogen or 1- to 20 carbon hydrocarbon radicals; and
      R⁶ are indepentently -H, halogen or 1- to 20 carbon hydrocarbon radicals; and
   (E) optionally from 1-50 percent by weight of a monovinylidene aromatic monomer represented by the formula Ar-C-(R⁷)=CH wherein R is -H or a 1 to 4 carbon hydrocarbon alkyl group; and
the amount of polymer (I) is from 30 to 95 percent by weight and the amount of tackifier (II) is from 5-70 percent by weight based on the weight of the composition.

Said weight percentages of the polymer being based on adhesive polymer weight. These compositions having excellent pressure sensitive adhesive properties including good combinations of tack and resistance to shear.

The essential monomeric constituent of the polymeric material is one or more of the well known (meth)acrylate type monomers. As used herein this refers to alkyl esters of acrylic or methacrylic acid wherein the alkyl group has 1 to 20 carbon atoms. These monomers are generally known for the preparation of latex polymers and are represented by the formula:

I CH₂=C(R¹)-C(O)-O-R²

wherein R¹ is -H or a methyl radical and R² is a straight or branched chain alkyl radical having from 1 to 20 carbon atoms. Preferably, R¹ is -H (i.e., an acrylate monomer is selected). Preferably, R² contains from 2 to 8 carbon atoms with R² more preferably being n-butyl or ethylhexyl radicals. Preferred monomers include n-butyl acrylate and ethyl hexyl acrylate. The polymers containing a broad range of (meth)acrylate levels, for example, from 1 to 97.5 weight percent based on adhesive polymer. Preferably the polymers contain from 10 to 97.5 weight percent (meth)acrylate, and more preferably from 30 to 95 to weight percent.

In addition to the (meth)acrylate monomers, the polymers optionally contain additional amounts of the well-known monovinylidene aromatic and/or conjugated diene monomers. In general, conjugated diene monomers are known for use in latex polymers and are represented by the following formula:

II CH₂=C(R³)-C(R⁴)=C(R⁵)-R⁶

wherein R³, R⁴, R⁵ and R⁶ are independently -H, halogen, or 1- to 20-hydrocarbon radicals. Preferably R³ is a -H, chloro or methyl radical and R⁴, R⁵ and R⁶ are -H (i.e., the conjugated diene is butadiene, isoprene or chloroprene). Most preferably, butadiene is used as the conjugated diene.

Monovinylidene aromatic monomers are well known in the art and commonly used in preparing latex polymers. These monomers are generally represented by the formula:

III Ar-C(R⁷)=CH₂

wherein Ar is phenyl or phenyl substituted with halogen and/or one or more hydrocarbon radical(s) having 1 to 4 carbon atoms and R⁷ is -H or a 1- to 4-carbon alkyl group. Preferred examples of such monomers include alpha methyl styrene and one or more of the vinyl toluene isomers, with styrene being the most preferred monovinylidene aromatic monomer.

The actual amounts of the (meth)acrylate and the optional conjugated diene and monovinylidene aromatic monomers used to prepare the latex polymer will depend upon the specific application intended for the pressure sensitive adhesive material. In general, the relative amounts are chosen to achieve a relatively soft (low Tg) polymer with higher levels of (meth)acrylate providing increased tack and softness. The monovinylidene aromatic and diene monomers can be used to replace amounts of the (meth)acrylate monomer depending on the balance of shear and adhesive strength required. If used, the monovinylidene aromatic monomer provides improved shear strength with an accompanying loss of tack. It typically constitutes from 1 to 50 weight percent, preferably from 5 to 30 weight percent, more preferably from 10 to 20 weight percent of the adhesive polymer.

If used, the conjugated diene typically constitutes from 1 to 80 weight percent and preferably from 30 to 70 weight percent of the adhesive polymer. It has also been found to be very desirable in compositions where high (meth)-acrylate contents are needed to use amounts of a conjugated diene as a crosslinking compound in amounts up to 5 weight percent, preferably 0.5 to 4 weight percent. In general, however, the types and relative amounts of these two optional components are selected to provide the desired basic polymer properties in a (meth)acrylate-type polymer.

Once the basic adhesive polymer properties are established, the property combinations are improved according to the present invention. One of the critical monomers which is employed to prepare the polymers according to the present invention is a hydroxyalkyl (meth)acrylate.

These monomers and their use in pressure sensitive adhesive compositions are generally known in the art for use with other monomer formulations and/or at lower levels. See, for example, GB-A-1 174 914 and JP-A-61-141,775 and 59-47,212. As used herein the term hydroxyalkyl (meth)acrylate refers to a hydroxy ester of acrylic or methacrylic acid represented by the following formula:

IV CH₂=C(R⁸)-C(O)-O-R⁹-OH

wherein R⁸ is -H or methyl radical and R⁹ is a straight or branched chain hydrocarbon radical having 1 to 10 carbon atoms. Preferably R⁹ is a methyl, ethyl, or propyl radical. The preferred hydroxyalkyl (meth)acrylate is hydroxyethyl acrylate. The hydroxyalkyl (meth)acrylate is beneficially used in amounts of from 1.5 to 17 weight percent based upon the total weight of the adhesive polymer. Generally 2 to 17 weight percent hydroxyalkyl (meth)acrylate is used, with amounts in the range of 3 to 15 weight percent being preferred, 4 to 10 being more preferred and 4 to 7 being most preferred.

Achieving optimized pressure sensitive adhesive properties in these (meth)acrylate-containing based polymers has been found to also hinge upon the use of itaconic acid in addition to the hydroxyalkyl (meth)acrylate. Itaconic acid is known in the art as one of the several comonomeric unsaturated acids suitable in latex polymer compositions. However, it has been found to be critical in the present compositions to select itaconic acid and use it in amounts in the range of 1 to 5 weight percent based on the adhesive polymer composition weight. Preferably, amounts in the range of greater than 1 up to 4 weight percent should be used, more preferably 1.1 to 3.5 weight percent.

While prior art generally teaches the use of unsaturated carboxylic acids in latex polymer compositions, the commonly used polymerizable acids (methacrylic acid, acrylic acid and fumaric acid) are found not to provide similar benefits, such as improved shear strength/tack combinations, in the present compositions. It is totally unexpected and surprising that in the compositions according to this invention benefits in shear strength would be obtained while maintaining a good level of tack only when using itaconic acid.

In aspects other than the composition of the monomer feed(s), the pressure sensitive adhesive polymers are prepared using conventional emulsion polymerization techniques. For example, the polymers can be prepared in a batch reaction, continuous reaction, or a batch reaction with one or more continuously added monomer streams. While not critical, the particle size of the latex can be selected to provide optimized adhesion and shear strength properties according to the teachings of US-A-4,419,481.

Upon completion of the latex polymerizaton process, usually at a solids level of 40 to 60 percent, the latex is desirably steam distilled to remove unreacted monomer and treated as necessary with acid or base to adjust the pH.

Insofar as the desired pressure sensitive adhesive properties are maintained, various optional ingredients can be used in these compositions. For example, monomers such as vinyl and/or vinylidene chloride can be incorporated. As well known regarding the preparation of latexes and pressure sensitive adhesives, other ingredients such as anti-foaming agents, wetting agents, thickeners, plasticizers, fillers, pigments, antioxidants and metal chelating agents may be used. Known anti-foaming agents include silicon oils and acetylene glycols. Typical plasticizers include mineral oil, liquid polybutenes, liquid polyacrylates and lanoline. Zinc oxide, titanium dioxide, aluminum hydrate, calcium carbonate, and clay are typically employed fillers. Common known wetting agents include alkylphenol ethoxylates, alkali metal dialkyl sulphosuccinates, acetylene glycols and alkali metal alkyl sulphates. Commercially available surfactants are listed in "McCutcheon's Emulsifiers and Detergents" published annually. Typical thickeners include polyacrylates, polyacrylamides, xanthan gums, modified celluloses or particulate thickeners such as silicas and clays.

Tackifiers which increase the adhesion of the compositions in general or for specific surfaces are also added. Suitable tackifiers include polyterpene resins, gum rosin, rosin esters and other rosin derivatives, oil-soluble phenolic resins, coumaroneindene resins and petroleum hydrocarbon resins. The tackifier can either be added during or before the polymerization process or blended in afterwards. It is used in amounts of from 5 to 70 weight percent based on the weight of tackifier plus base adhesive polymer, preferably at least 10 weight percent and most preferably at least 15 weight percent. The levels do not exceed 70 weight percent with levels of 50 weight percent or less preferred.

The compositions of the present invention may be used as the adhesive component in pressure sensitive tapes, labels, films and foams. They adhere well to polymer surfaces such as plasticized poly(vinylchloride), Mylar brand polyester film, cellulose acetate, nylon, polyethylene and polypropylene as well as to paper, metal and painted surfaces. They are especially useful in the adhesive components of labels, tapes, decorative vinyl sheets, decals, and vinyl foams and tiles.

Known coating processes, including roller coaters, blade coaters, Meyer rods or air coaters, can be used to prepare such articles of manufacture with the pressure sensitive adhesive compositions of the present invention. The resin may be coated directly to the article which then may or may not have a conventional release paper for temporary protection. Alternatively, the adhesive may be coated onto a release paper and then transferred to the second surface which is desired to be coated by passing both the release paper and the second surface together through rolls.

The coated substrate is dried by normal means, usually by passing it through a heating tunnel or oven which may use circulating hot air or infrared lamps to dry the coated substrate. The drying time will be a function of a number of factors such as the heat capacity of the substrate, the type of heating, the oven temperature, air velocities (if circulating air is used) and the rate of passage of the substrate through the oven or heating tunnel. One skilled in art may readily determine suitable time/temperature relationships to determine optimum drying conditions in particular equipment for the product.

The present invention will be further illustrated by the following experiments. Unless otherwise specified, all amounts are in parts by weight and temperatures in degrees Celsius.

To prepare the sample compositions described and evaluated in the following Tables, the amounts of monomers indicated in the Table were fed continuously to a heated, agitated latex polymerization reactor which had been purged with nitrogen. As the initial charge, the reactor was supplied with distilled water, Versenol® 120 brand chelating agent (0.02 weight parts), and a styrene polymer seed latex (0.50 weight parts based on its solids). Upon heating the initial charge to a temperature of 90°C the aqueous and monomer feeds were started and supplied over a period of 240 minutes. The aqueous feed, contained sodium persulfate initiator (0.70 weight parts), Dowfax® 2A1 brand alkylated diphenyl oxide disulphonate surfactant (0.60 weight parts) and sodium hydroxide (0.20 weight parts). The monomer feed components are indicated in the Tables. Versenol and Dowfax are registered trademarks of the Dow Chemical Company.

For convenience, the hydroxy alkyl (meth) acrylate (if used) was fed continuously as a separate stream. Where a polymerizable carboxylic acid was used, its location was varied according to its solubility. Itaconic acid was fed as a separate aqueous feed (for 175 minutes) acrylic and methacrylic acids were added to the main monomer feed, and fumaric acid was added to the initial reactor charge. Chain transfer agents were used as shown in the Tables with carbon tetrachloride being added to the main monomer feed. Tertiary dodecyl mercaptan was usually also added to the monomer feed but was added to the initial reactor charge in Compositions 9, 10, and 11. During the polymerization reaction the temperature was maintained at 90°C followed by a cook-down period of 60 minutes at 90°C after all feeds nave been completed.

At this time the solids level was about 50 percent by weight. The remaining minor amounts of unpolymerized monomer were devolatilized and the pH adjusted to about 6. Since there was essentially complete conversion of the monomers, the polymer composition is identical to the composition of the monomer feeds supplied. The average particle size of each latex was 0.16 »m as measured by light scattering.

In preparing pressure sensitive adhesives formulations the latexes were blended with Triton® X-100 brand octylphenol ethoxylate wetting agent (1 weight part), Acrylon® A300 brand polyacrylate thickener (0.125 weight parts) and Snowtack® 42CF brand resin tackifier as indicated.

These sample adhesive resins were coated onto release paper to give a dry coating weight of about 20 grams per square meter (g/m²) using a wire wound rod. The adhesive layer was then dried and transferred to a face stock paper sheet by passing between two nip rollers. Shear adhesion was measured by fixing an area 3.23 square centimeters (cm²) to a steel plate and measuring the time in minutes (min) for the sample to be removed at an angle of 2 degrees by a weight of 1000 grams being attached thereto. The tack of the samples was measured by the Rolling Ball method. In this method, a section of the adhesive coated sheet 20 centimeters in length was placed on a flat surface with the adhesive side facing up. A 1.1 centimeter diameter steel ball was rolled onto the adhesive layer from an 8 centimeter long, V-shaped channel inclined at an angle of 30 degrees. The distance the ball traveled before stopping is given in centimeters and was a measure of tack, the shorter distances indicating greater tack. If the tack was insufficient the ball rolled completely off the coated sheet (>20cm).

In the following Tables these abbreviations are used: hydroxyalkyl (meth)acrylate is HA(M)A, n-butyl acrylate is nBuAc, butadiene is But, styrene is Sty, itaconic acid is IA, acrylic acid is AA, methacrylic acid is MAA, fumaric acid is FA, hydroxyethyl acrylate is HEA, hydroxypropyl acrylate is HPA and hydroxyethyl methacrylate is HEMA. In addition the following abbreviations are used: chain transfer agent is CTA, carbon tetrachloride is CCl4 and t-dodecyl mercaptan is t-DDM.

As can be seen comparing Composition 3 to Compositions 1* and 2*, there is clearly a surprising benefit from the combination of IA and HEA in the adhesive polymer. Comparing 3 and 4*, it can be seen that acrylic acid does not provide such an effect to these compositions. Compositions 5* 6, 7 and 8 illustrate similar benefits with differing HA(M)A compounds.

While several compositions in the tables exhibited adhesive failure in the shear strength test, the excellent inherent shear strength of the polymer is of major importance. The reduced adhesive strength (tack) is rectified by the use of tackifier.

**TABLE 1**

| Effect of the IA/HA(M)A Combination | | | | | | | | |
|---|---|---|---|---|---|---|---|---|
| Composition Number | 1* | 2* | 3 | 4* | 5* | 6 | 7 | 8 |
| Monomers: | | | | | | | | |
| nBuAc | 39 | 38 | 37 | 37 | 47.5 | 45 | 45 | 45 |
| But | 49 | 47 | 46 | 45 | 50.5 | 48 | 48 | 48 |
| Sty | 10 | 10 | 10 | 10 | - | - | - | - |

| Acid: | | | | | | | | |
|---|---|---|---|---|---|---|---|---|
| IA | 2 | - | 2 | - | 2 | 2 | 2 | 2 |
| AA | - | - | - | 3 | - | - | - | - |

| HA(M)A: | | | | | | | | |
|---|---|---|---|---|---|---|---|---|
| HEA | - | 5 | 5 | 5 | - | 5 | - | - |
| HPA | - | - | - | - | - | - | 5 | - |
| HEMA | - | - | - | - | - | - | - | 5 |

| CTA: | | | | | | | | |
|---|---|---|---|---|---|---|---|---|
| CCl₄ | 3 | 3 | 3 | 3 | 3 | 3 | 3 | 3 |
| t-DDM | 1 | 1 | 1 | 1 | 1 | 1 | 1 | 1 |

| Properties | | | | | | | | |
|---|---|---|---|---|---|---|---|---|
| 19% Tackifier | | | | | | | | |
| Tack | 3 | 5 | 7 | 7 | 5.5 | 9 | 7.5 | 14 |
| Shear | 16 | 4 | 104 | 42 | 13 | 249 | 65 | 11^{a} |

| 35% Tackifier | | | | | | | | |
|---|---|---|---|---|---|---|---|---|
| Tack | 4 | 2.5 | 4 | 4.5 | 4.5 | 5 | 5 | 6 |
| Shear | 7.5 | 2.3 | 33 | 11 | 4 | 80 | 14 | 15 |

| | | | | | | | | |
|---|---|---|---|---|---|---|---|---|
| * Comparative example, not an example of the present invention | | | | | | | | |
| ^{a} Denotes adhesive failure in shear test. | | | | | | | | |

In the following Table 2, the criticality of the particular acid type in the polymer is shown.

**TABLE 2**

| Effect of Acid Type in the polymer | | | | |
|---|---|---|---|---|
| Composition Number | 9* | 10* | 11* | 12* |
| Monomers: | | | | |
| nBuAc | 92 | 91 | 92 | 90.5 |
| But | 1 | 1 | 1 | 2.5 |
| HEA | 5 | 5 | 5 | 5 |

| Acid: | | | | |
|---|---|---|---|---|
| IA | 2 | - | - | - |
| AA | - | 3 | - | - |
| MAA | - | - | 2 | - |
| FA | - | - | - | 2 |

| CTA: | | | | |
|---|---|---|---|---|
| CCl₄ | 3 | 3 | 3 | 3 |
| T-DDM | 0.5 | 0.5 | 0.5 | 0.5 |

| Properties (No Tackifier) | | | | |
|---|---|---|---|---|
| Tack | 6 | 8.5 | 3 | 5 |
| Shear | 30 | 10 | 13 | 1.5 |

| | | | | |
|---|---|---|---|---|
| *Comparative Example, not an example of the present inventon | | | | |

**TABLE 3**

| Effect of the IA level | | | | | |
|---|---|---|---|---|---|
| Composition Number | 13* | 14** | 15 | 6 | 16 |
| Monomers: | | | | | |
| nBuAc | 46 | 46 | 45.5. | 45 | 43.5 |
| But | 49 | 48.5 | 48.5 | 48 | 46.5 |
| IA | 0 | 0.5 | 1 | 2 | 5 |
| HEA | 5 | 5 | 5 | 5 | 5 |

| CTA: | | | | | |
|---|---|---|---|---|---|
| CCl₄ | 3 | 3 | 3 | 3 | 3 |
| t-DDM | 1 | 1 | 1 | 1 | 1 |

| Properties | | | | | |
|---|---|---|---|---|---|
| 19% Tackifier | | | | | |
| Tack | 6 | 6.5 | 8 | 9 | >20 |
| Shear | 2 | 4 | 20 | 249 | 0.7^{a} |

| 35% Tackifier | | | | | |
|---|---|---|---|---|---|
| Tack | 3 | 2.5 | 4 | 5 | 16 |
| Shear | 1 | 1.5 | 5 | 80 | 8^{a} |

| | | | | | |
|---|---|---|---|---|---|
| * Comparative example, not an example of the present invention. | | | | | |
| ** Comparative example illustrative of Japanese Patent 59-47,212 and not an example of the present invention. | | | | | |
| ^{a} Denotes adhesive failure in shear test. | | | | | |

**TABLE 4**

| Effect of HEA level | | | | | | |
|---|---|---|---|---|---|---|
| Composition Number | 5* | 17 | 18 | 6 | 19 | 20 |
| Monomer | | | | | | |
| nBuAc | 47.5 | 47 | 46.5 | 45 | 43 | 39 |
| But | 50.5 | 50 | 49.5 | 48 | 46 | 42 |
| IA | 2 | 2 | 2 | 2 | 2 | 2 |
| HEA | 0 | 1 | 2 | 5 | 9 | 17 |

| CTA: | | | | | | |
|---|---|---|---|---|---|---|
| CC1₄ | 3 | 3 | 3 | 3 | 3 | 3 |
| T-DDM | 1 | 1 | 1 | 1 | 1 | 1 |

| Properties | | | | | | |
|---|---|---|---|---|---|---|
| 19% Tackifier | | | | | | |
| Tack | 5.5 | 7.5 | 9 | 9 | 15 | 16 |
| Shear | 13 | 16 | 47 | 249 | 97 | 46^{a} |

| 35% Tackifier | | | | | | |
|---|---|---|---|---|---|---|
| Tack | 4.5 | 3 | 3.5 | 5 | 7 | 6.5 |
| Shear | 4 | 6 | 23 | 80 | 30 | 54 |

| | | | | | | |
|---|---|---|---|---|---|---|
| * Comparative example, not an example of the present invention. | | | | | | |
| ^{a} Denotes adhesive failure in shear test. | | | | | | |

## Claims

1. A pressure sensitive adhesive composition comprising
(I) a polymer consisting of
(A) at least one (meth)acrylate monomer represented by the formula CH₂=C(R¹)C(O)-OR² wherein R¹ is -H or a methyl radical and R² is a straight or branched chain alkyl radical having from 1-20 carbon atoms;
(B) a hydroxyalkyl (meth)acrylate monomer represented by the formula CH₂=C(R⁸)-C(O)-O-R⁹-OH wherein R⁸ is -H or a methyl radical and R⁹ is a straight or branched chain hydrocarbon radical having 1-10 carbon atoms;
(C) from 1-5 percent by weight of itaconic acid monomer and
(II) a tackifier
**characterized in that**
the polymer (I) contains from 1.5 to 17 percent by weight of component (B); and
(D) optionally from 1-80 percent by weight of a conjugated diene monomer represented by the formula CH₂=C(R³)C(R⁴)=C(R⁵)-R⁶ wherein R³, R⁴, R⁵ and R⁶ are indepentently -H, halogen or 1- to 20 carbon hydrocarbon radicals; and
(E) optionally from 1-50 percent by weight of a monovinylidene aromatic monomer represented by the formula Ar-C-(R⁷)=CH₂ wherein R⁷ is -H or a 1 to 4 carbon hydrocarbon alkyl group; and
the amount of polymer (I) is from 30 to 95 percent by weight and the amount of tackifier (II) is from 5-70 percent by weight based on the weight of the composition.

2. A pressure sensitive adhesion composition according to claim 1 wherein R₂ of component (A) is a C₂₋₈ hydrocarbon radical.

3. A pressure sensitive adhesive composition according to claim 2 which comprises (I) from 50 to 90 percent by weight of the adhesive polymer composition; and (II) from 10 to 50 percent by weight of a tackifier.

4. A pressure sensitive adhesive composition according to claim 3 wherein the adhesive polymer (I) contains from about 1 to about 97.5 percent by weight of a (meth)acrylate monomer (A).

5. A pressure sensitive adhesive composition according to claim 4 wherein the adhesive polymer contains 30 to 70 percent by weight of a conjugated diene monomer (D).

6. A pressure sensitive adhesive composition according to claim 5 wherein the adhesive polymer (I) contains from 5 to 30 percent of a monovinylidene aromatic monomer (E).

7. A pressure sensitive adhesive composition according to claim 4 wherein the acrylate monomer (A) is n-butyl acrylate and/or 2-ethyl hexylacrylate.

8. A pressure sensitive adhesive composition according to claim 4 wherein the hydroxyalkyl (meth)acrylate monomer (B) is hydroxyethyl acrylate or hydroxypropyl acrylate.

9. An article coated with a pressure sensitive adhesive composition according to claim 1.

10. An article according to claim 9 wherein the coated article is a film tape or label.

## Patentansprüche

1. Haftklebezusammensetzung enthaltend
( I) ein Polymer bestehend aus
(A) mindestens einem (Meth)acrylatmonomer der Formel CH₂=C(R¹)C(O)-OR², in der R¹ Wasserstoff oder eine Methylgruppe ist und R² eine gradkettige oder verzweigte Alkylgruppe mit 1-20 Kohlenstoffatomen ist,
(B) einem Hydroxyalkyl(meth)acrylatmonomer der Formel CH₂=C(R⁸)-C(O)-O-R⁹-OH, in der R Wasserstoff oder eine Methylgruppe ist und R⁹ ein gradkettiger oder verzweigter Kohlenwasserstoffrest mit 1-10 Kohlenstoffatomen ist,
(C) von 1-5 Gew.-% Itaconsäuremonomer und
(II) einen Klebrigmacher,
**dadurch gekennzeichnet,**
daß das Polymer (I) von 1,5-17 Gew.-% von Bestandteil (B) enthält und
(D) gegebenenfalls von 1-80 Gew.-% eines konjugierten Dienmonomers der Formel CH₂=C(R³)C(R⁴)=C(R⁵)-R⁶, in der R³, R⁴, R⁵ und R⁶ unabhängig Wasserstoff, Halogen oder (C₁-C₂₀)-Kohlenwasserstoffreste sind, und
(E) gegebenenfalls von 1-50 Gew.-% eines monovinylidenaromatischen Monomeren der Formel Ar-C-(R⁷)=CH₂, in der R⁷ Wasserstoff oder eine (C₁-C₄)-Alkylkohlenwasserstoffgruppe ist, und die Menge an Polymer (I) von 30-95 Gew.-% und die Menge von Klebrigmacher (II) von 5-70 Gew.-%, bezogen auf Gewicht der Zusammensetzung, beträgt.

2. Haftklebezusammensetzung nach Anspruch 1,
**dadurch gekennzeichnet,**
daß R² von Bestandteil (A) eine C₂₋₈ Kohlenwassserstoffgruppe ist.

3. Haftklebezusammensetzung nach Anspruch 2,
**dadurch gekennzeichnet,**
daß sie enthält (I) von 50-90 Gew-% der Klebstoffpolymerzusammensetzung und (II) von 10-50 Gew.-% eines Klebrigmachers.

4. Haftklebezusammensetzung nach Anspruch 3,
**dadurch gekennzeichnet,**
daß das Klebstoffpolymer (I) von etwa 1 bis etwa 97,5 Gew.-% eines (Meth)acrylatmonomers (A) enthält.

5. Haftklebezusammensetzung nach Anspruch 4,
**dadurch gekennzeichnet,**
daß das Klebstoffpolymer von 30-70 Gew.-% eines konjugierten Dienmonomers (D) enthält.

6. Haftklebezusammensetzung nach Anspruch 5,
**dadurch gekennzeichnet,**
daß das Klebstoffpolymer (I) von 5-30 % eines monovinylidenaromatischen Monomers (E) enthält.

7. Haftklebezusammensetzung nach Anspruch 4,
**dadurch gekennzeichnet,**
daß das Acrylatmonomer (A) n-Butylacrylat und/oder 2-Ethylhexylacrylat ist.

8. Haftklebezusammensetzung nach Anspruch 4,
**dadurch gekennzeichnet,**
daß das Hydroxyalkyl(meth)acrylatmonomer (B) Hydroxyethylacrylat oder Hydroxypropylacrylat ist.

9. Gegenstand, der mit einer Haftklebezusammensetzung nach Anspruch 1 beschichtet ist.

10. Gegenstand nach Anspruch 9,
**dadurch gekennzeichnet,**
daß der beschichtete Gegenstand ein Folienband oder Etikett ist.

## Revendications

1. Composition d'adhésif sensible à la pression, comprenant :
(I) un polymère constitué de :
(A) au moins un monomère acrylate ou méthacrylate, représenté par la formule CH₂=C(R¹)C(O)-OR², dans laquelle R¹ représente un atome d'hydrogène ou un groupe méthyle et R² représente un groupe alkyle à chaîne droite ou ramifiée, ayant de 1 à 20 atomes de carbone,
(B) un monomère acrylate ou méthacrylate d'hydroxyalkyle, représenté par la formule CH₂=C(R⁸)-C(O)-O-R⁹-OH, dans laquelle R⁸ représente un atome d'hydrogène ou un groupe méthyle et R⁹ représente un groupe hydrocarboné à chaîne droite ou ramifiée, ayant 1 à 10 atomes de carbone,
(C) de 1 à 5% en poids de monomère acide
itaconique, et
(II) un agent pour l'adhérence,
caractérisée en ce que le polymère (I) contient de 1,5 à 17% en poids de constituant (B), et éventuellement
(D) de 1 à 80% en poids d'un monomère diène conjugué, représenté par la formule CH₂=C(R³)C(R⁴)=C(R⁵)-R⁶, dans laquelle R³, R⁴, R⁵ et R⁶ représentent chacun indépendamment un atome d'hydrogène ou d'halogène ou un groupe hydrocarboné ayant 1 à 20 atomes de carbone, et éventuellement
(E) de 1 à 50% en poids d'un monomère aromatique monovinylique, représenté par la formule Ar-C-(R⁷)=CH₂, dans laquelle R⁷ représente un atome d'hydrogène ou un groupe alkyle ayant 1 à 4 atomes de carbone, et
en ce que la quantité de polymère (I) représente de 30 à 95% en poids et la quantité d'agent pour l'adhérence (II) représente de 5 à 70% en poids par rapport au poids de la composition.

2. Composition d'adhésif sensible à la pression, selon la revendication 1, pour laquelle le groupe R² du constituant (A) est un groupe hydrocarboné en C₂ à C₈.

3. Composition d'adhésif sensible à la pression, selon la revendication 2, qui comprend (I) de 50 à 90% en poids de la composition de polymère adhésif et (II) de 10 à 50% en poids d'un agent pour l'adhérence.

4. Composition d'adhésif sensible à la pression, selon la revendication 3, dans laquelle le polymère adhésif (I) contient d'environ 1% à environ 97,5% en poids d'un monomère acrylate ou méthacrylate (A).

5. Composition d'adhésif sensible à la pression, selon la revendication 4, dans laquelle le polymère adhésif contient 30 à 70% en poids d'un monomère diène conjugué (D).

6. Composition d'adhésif sensible à la pression, selon la revendication 5, dans laquelle le polymère adhésif (I) contient de 5 à 30% d'un monomère aromatique monovinylique (E).

7. Composition d'adhésif sensible à la pression, selon la revendication 4, dans laquelle le monomère acrylate (A) est l'acrylate de n-butyle et/ou l'acrylate de 2-éthylhexyle.

8. Composition d'adhésif sensible à la pression, selon la revendication 4, dans laquelle le monomère acrylate ou méthacrylate d'hydroxyalkyle (B) est l'acrylate d'hydroxyéthyle ou l'acrylate d'hydroxypropyle.

9. Article revêtu d'une composition d'adhésif sensible à la pression, selon la revendication 1.

10. Article revêtu selon la revendication 9, qui est un film, un ruban ou une étiquette.
